# EUROPEAN PATENT APPLICATION

(11) **EP 3 926 588 A1**
(43) Date of publication of application: **22.12.2021**
(21) Application number: 20181071.0
(22) Date of filing: 19.06.2020
(51) Int. Cl.: G06T 19/00, B60R 1/00, G06F 3/01

(54) **IMAGE DISPLAYING APPARATUS AND METHOD OF DISPLAYING IMAGE DATA ON A VR DISPLAY DEVICE, PARTICULARLY DISPOSED IN A VEHICLE**

(71) Applicant: Alpine Electronics, Inc., Tokyo 145-0067 (JP)
(72) Inventor: Galos, Andreas, 70771 Leinfelden-Echterdingen (DE)
(74) Representative: Schmitt-Nilson Schraud Waibel Wohlfrom Patentanwälte Partnerschaft mbB

(57) **Abstract**

A method of displaying image data on a virtual reality, VR, display device (14), particularly disposed in a vehicle (1) and associated with a user (5) accommodated in the vehicle (1), comprises the steps of receiving, by a computing device (13), at least one first image (21) for displaying on a VR display device (14), the at least one first image containing information for displaying a three-dimensional VR room to the user of the VR display device, with the three-dimensional VR room comprising at least one virtual see-through opening to an outer side of the VR room, and receiving, by the computing device (13), at least one sequence of second images (22) of a real environment proximate to the user captured by at least one camera. The at least one first image (21) and the at least one sequence of second images (22) are displayed simultaneously on the VR display device (14) such that at least part of the at least one sequence of second images is visible to the user in the at least one virtual see-through opening of the VR room.

## Description

The present invention relates to an image displaying apparatus, particularly configured to be used in a vehicle, a method of displaying image data on a VR display device, which is preferably disposed in a vehicle, and a computer program product comprising software code sections to perform such method.

Some existing entertainment systems available for use in vehicles provide an audio and/or video entertainment program to occupants via loudspeakers and display devices. For example, a driver and front seat passenger may listen to a radio program, while a rear seat passenger watches through a so-called rear seat entertainment system a video on a video display and listens to the corresponding audio via headphones.

Rear seat entertainment systems for vehicles, such as cars (automobiles), are well known, and typically comprise a monitor with a monitor screen mounted to the rear of a front seat for viewing by a passenger seated behind that front seat. The monitor may be mounted in the seat-back itself, in a headrest for that seat or otherwise mounted to the back of the seat or the back of the headrest or from posts mounting the headrest. Similar such entertainment systems are incorporated in the seat backs on some railway passenger seats and seats in long distance coach transport vehicles. Such known rear seat entertainment system setups may have drawbacks such as limited extension of the display monitor due to mounting contraints, or obstruction by vehicle structure, such as seats, headrests and other passengers.

Other entertainment systems may use head-mounted displays worn by the user for displaying virtual reality (VR) images, such as a movie. A drawback of such head-mounted displays is that the user's view on the real world is blocked out by the head-mounted display. Since the viewing content is generated digitally, a user's feeling of authenticity or reality may be low, and the user may miss a relation to the real world. Especially when employed in a moving vehicle, the user may experience motion sickness when using such head-mounted VR setup.

Another technology with closer relation to the real environment is so-called augmented reality (AR). In AR, a user's view is passing through a semi-transparent head-mounted display, wherein virtual information is added to (blended in) the view of real world objects. However, since the display is semi-transparent, it is impossible to completely block out particular areas from the view, like e.g. the original room appearance where the user is located. This may be especially annoying in a vehicle, where the user's view is obstructed by vehicle body parts and the user is permanently viewing such vehicle body parts which are not contributing to the entertainment experience.

In EP 3 098 689 A1, there is disclosed an image display device worn on a user's head, in which a head-mounted display temporarily removes the image in a portion specified with a touch panel, and displays an image of the real world captured with an outward-facing camera in the removed image portion. The user becomes enabled to interact with the real world without diminishing the sense of immersion into the virtual world. A user wearing such a head-mounted display is able to lessen his or her psychological resistance against immersing oneself into the virtual world. In addition, the user is able to reduce the risk of physical harm caused by body movements in the real world, even when immersed in the virtual world. The image display device and method, however, require user interaction according to which the head-mounted display replaces a partial, user-specified region out of the display region of the display unit displaying an image of the virtual world with an image of the real world captured with the outward-facing camera.

It is an object of the present invention to provide an image displaying apparatus and a method of displaying image data to a user, which may advantageously be employed in a moving object, such as a vehicle with the user seated in the vehicle, and which are capable to overcome the above mentioned drawbacks.

The invention relates to an image displaying apparatus and a method of displaying image data on a VR display device, which is particularly disposed in a vehicle and associated with a user accommodated in the vehicle, according to the appended claims. The invention further relates to a computer program product comprising software code sections which are adapted to perform such method.

In a first aspect, there is disclosed a method of displaying image data on a VR display device, which is particularly disposed in a vehicle and associated with a user accommodated in the vehicle, wherein the method comprises the steps of: receiving, by a computing device comprising a processor and adapted to be coupled with the VR display device, at least one first image for displaying on the VR display device, the at least one first image containing information for displaying a three-dimensional VR room to the user of the VR display device, with the three-dimensional VR room comprising at least one virtual see-through opening to an outer side of the VR room, receiving, by the computing device, at least one sequence of second images of a real environment proximate to the user captured by at least one camera, and displaying, by the computing device, the at least one first image and the at least one sequence of second images simultaneously on the VR display device such that at least part of the at least one sequence of second images is visible to the user in the at least one virtual see-through opening of the VR room.

According to another aspect, there is disclosed an image displaying apparatus, particularly configured to be used in a vehicle, comprising a computing device comprising a processor, wherein the computing device is configured to be coupled with a VR display device, which is particularly associated with a user accommodated in the vehicle. The computing device is further configured to receive at least one first image for displaying on the VR display device. The at least one first image contains information for displaying a three-dimensional VR room to the user, with the three-dimensional VR room comprising at least one virtual see-through opening to an outer side of the VR room. The computing device is further configured to receive at least one sequence of second images of a real environment proximate to the user, the at least one sequence of second images captured by at least one camera, such as a panoramic camera with a panoramic field of view. The computing device is configured to display the at least one first image and the at least one sequence of second images simultaneously on the VR display device such that at least part of the at least one sequence of second images is visible to the user in the at least one virtual see-through opening of the VR room.

The present invention therefore provides an image displaying apparatus and a method of displaying image data on a VR display device which are capable to show a virtual room in the real world, such that the user can immersively experience a VR room in real-time, but is still able to see the real world outside the VR room through the virtual see-through openings, such as windows, in a natural way and without user interaction, which provides a very realistic VR experience during motion, e.g. in a vehicle, and also reduces motion sickness.

The invention may thus achieve a most realistic solution of mixed reality, providing a possibility of total immersion to a real world with a perfectly covering virtual graphic overlay. At the same time, motion sickness for VR applications in the vehicle may be avoided, because the motion reference of the real move is still visible through the VR room see-through openings.

Advantageously, the present invention addresses the problems of, e.g., known rear seat entertainment systems as mentioned above. It particularly provides an unobstructed view around the passenger's current position, such as in the vehicle, is capable to provide a large-screen movie playback on the VR display device, while it avoids motion sickness which may arise if the VR display device is used in the vehicle without any additional measures. Aspects of the invention could be used for, e.g., vehicle rear-seat entertainment systems, but also for vehicle interior design or even architecture planning.

With this concept, the user can enjoy a virtual room, but does not lose the understanding of the real environment, because he or she can see the real world in real time through the virtual see-through openings.

Even if a rear seat passenger is watching a movie on the VR display device, the passenger will not suffer from motion sickness caused by using the VR display device during motion of the vehicle, since the real environment is still visible, and may be experienced in a most natural way through the vehicle windows or doors. The passenger can enjoy an unobstructed view of the environment and journey around the vehicle, which is provided by the sequence of second images which may be captured by a vehicle camera during motion of the vehicle.

For vehicle interior design, for example, an advantageous embodiment provides that the VR room is a three-dimensional VR room inside the vehicle (like a virtual graphic overlay on the real car environment) and the at least one virtual see-through opening is a virtual vehicle window or door. Accordingly, it is possible to "change" the interior design of the vehicle passenger space, for example in a pre-design concept phase of development of a new vehicle, and drive in the vehicle with a different vehicle passenger space appearance, but with reality still visible through the virtual see-through openings, such as virtual vehicle windows or doors. This may help in the vehicle design process, when a new vehicle's inner design may be "tested" under real driving experiences.

According to an embodiment, the virtual see-through opening has a structure of a window or door provided in a wall of a virtual delimited space, such as the VR room which may be a virtual room inside a building or a virtual vehicle passenger space.

According to an embodiment, the at least one virtual see-through opening is a virtual see-through opening to an outer side of the vehicle.

According to a further embodiment, the VR display device is part of a rear-seat entertainment system of the vehicle. According to a further embodiment, the VR display device is a head-mounted VR display device adapted to be worn by the user.

According to an embodiment, the at least one sequence of second images comprises images captured by an omnidirectional camera or camera arrangement with an approximately 360-degree field of view at least in the horizontal plane. As such, an implementation with enhanced freedom of direction-of-view can be achieved with a panoramic, like a 360-degree field of view, camera or camera arrangement.

According to an embodiment, the at least one first image is at least one sequence of first images. The sequence of first images and/or sequence of second images may be a respective part of a respective video stream.

According to an embodiment, a moving speed of images of the sequence of second images corresponds to a moving speed of the user in the real environment. This may efficiently reduce motion sickness if both moving speeds are corresponding with each other. For example, the respective moving speed may be set in accordance with a vehicle speed measured by a speed measuring device of the vehicle.

According to a further embodiment, the computing device may be comprised in at least one of: the vehicle, the at least one camera, the VR display device, and a portable device adapted to be carried by the user. Preferably the portable device is one of a smartphone and tablet computer. The computing device may be, for example, implemented in, or part of, a processor of an ECU (electronic control unit) or a HU (heat unit) of the vehicle, or may be a separate component (e.g. coupled to the Ethernet-Bus or CAN-Bus of the vehicle), or may be a distributed system using one or more processors and integrated circuits in or outside the vehicle. For example, the determining of the moving speed of the sequence of images may be performed in a processor of the vehicle's ECU, whereas the providing of the images to the VR display device may be performed by the processor of the user's smartphone, and/or a processor in the camera. For example, the VR display device may be an apparatus in which the smartphone is placed behind a screen mounted on the user's head, and the display screen of the smartphone itself then displays the first and second images superimposed one upon the other through the screen, thus providing an impression of a VR display. The functions performed by the computing device may be implemented in hardware and/or in software.

According to another aspect, there is provided a computer program or computer program product comprising software code sections which are adapted to perform a method according to the invention as described herein. In particular, such computer program product may be implemented, in principle, in any computing device on the vehicle or outside the vehicle which is appropriate to perform the respective function. As set out above, such computing device may be, for example, implemented in, or part of, a processor of an ECU of the vehicle, or may be a separate component (e.g. coupled to the Ethernet-Bus of the vehicle through wire or wirelessly), or may be a distributed system using one or more processors. The computer program may be stored on a computer readable medium.

Any aspects and embodiments described herein with respect to the method can equally or analogously be employed in the image displaying apparatus as described herein, and vice versa, with the computing device and/or at least one camera configured (by software and/or hardware) appropriately.

The present invention can be used, in principle, in any type of vehicle, preferably in a car (automobile) of common type. The present invention can also be used in a railway passenger vehicle, in a coach transport vehicle, or in an airplane. The image displaying apparatus may be used as a "passenger seat entertainment system" (in a manner like a rear seat entertainment system of a known implementation), e.g., in which a vehicle passenger (seated in a passenger or rear seat) watches a video (such as a movie) through a head-mounted display device while the vehicle moves through the environment.

Aspects of the invention and embodiments will now be described with reference to the following Figures, in which
- Fig. 1: depicts a schematic view of a vehicle including an image displaying apparatus according to an embodiment of the invention,
- Fig. 2: is a schematic block diagram of an image displaying apparatus accord-ing to an embodiment of the invention,
- Fig. 3: shows a schematic depiction of a display provided by a VR display device of an image displaying apparatus according to an embodiment of the invention with a sequence of first images, e.g. of a VR room, superimposed on a sequence of second images of a real environment, which is proximate to the user, captured by a camera.

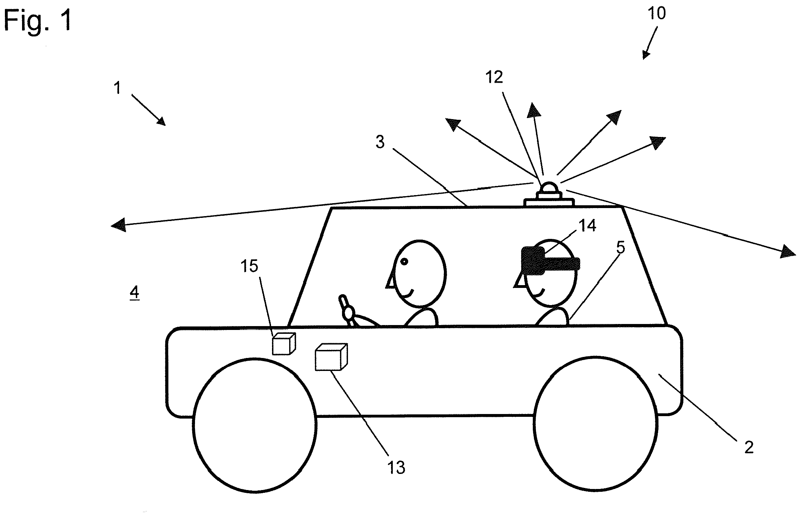

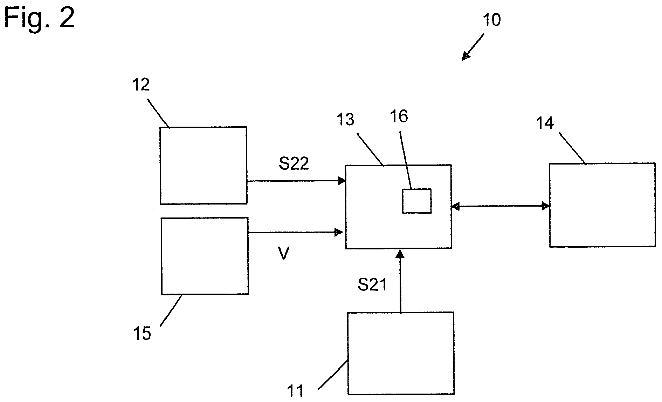

Fig. 1 in combination with Fig. 2 shows a vehicle and a schematic block diagram of an image displaying apparatus 10 with a schematic view of a vehicle 1 including such image displaying apparatus 10 according to embodiments of the invention.

The vehicle 1 generally comprises a vehicle chassis 2 and a roof 3 as is known with common vehicles, such as commonly known cars. A human person 5 (also designated herein as "user" or "passenger"), such as a rear seat passenger travelling in the vehicle 1, is seated in a back seat of the vehicle 1 and is provided with a virtual reality (VR) display device 14, in this embodiment a head-mounted display device, which can be worn on the user's head, as is commonly known in the art. For example, the head-mounted display device 14 is a commonly known VR headset. However, any other suitable VR display device may also be used, such as two- or three-dimensional monitors or touch screens, etc.

The image displaying apparatus 10 basically comprises a computing device 13 which is capable of and configured to be coupled with a camera 12, in this embodiment a panoramic vehicle camera or camera arrangement, and the head-mounted display device 14. In use configuration, the computing device 13, which may comprise one or more microprocessors 16 as commonly used in, e.g., vehicle ECUs, HUs, digital camera apparatuses, or in smartphones, is coupled with the camera 12 and the head-mounted display device 14, e.g., in wired manner or wirelessly. For example, the computing device 13 may be part of a smartphone (for example, may be or may be a part of one of the smartphone's microprocessors) and may be coupled, for example, by wireless Bluetooth^{®} standard (to name only one possibility) to the camera 12 and the head-mounted display device 14. According to another configuration, as shown in Fig. 1, the computing device 13 may be part of the vehicle 1 (such as implemented in the vehicle head unit (HU) or in the ECU, or elsewhere) and may be coupled with the camera 12 wirelessly (e.g., if the camera is an after-market product and installed on the vehicle after manufacture thereof), or in wired manner, e.g., via an Ethernet-Bus or CAN-Bus (e.g., if the camera is an OEM product). The same techniques may be used, in principle, analogously for coupling the computing device 13 to the head-mounted display device 14, which typically is available for the user separately from the vehicle and may be used also in other applications, such as in home entertainment. Other suitable wired and/or wireless configurations and connections between these components are also possible. For example, in a distributed system, the computing device 13 may also comprise or be connected with a so-called Cloud-Server, which is a remote server computer somewhere outside the vehicle, for example coupled through a mobile communications network with the smartphone, ECU and/or HU of the vehicle, respectively, and to which certain processing or calculation procedures can be outsourced. Therefore, according to embodiments of the invention, the image displaying apparatus 10 may be a partially vehicle integrated device, or may be operated in an autarkic manner, without requiring any sensors and/or computing or processing capabilities of the vehicle 1.

In this embodiment, the camera 12 is a panoramic vehicle camera or camera arrangement mounted on or integrated with the vehicle 1. Preferably, the camera 12 has a panoramic field of view at least in a horizontal plane of the vehicle 1 and is mounted at the roof 3 of the vehicle 1. Advantageously, in order to reduce motion sickness (kinetosis symptoms), the field of view of the camera 12 corresponds to the user's visual field.

Preferably, the camera 12 is an omnidirectional vehicle camera with an approximately 360-degree field of view at least in the horizontal plane. In particular, the omnidirectional vehicle camera 12 has a 360-degree field of view, wherein "approximately 360 degree" shall mean that the beginning and end of an image frame (the side edges of an image) may not exactly coincide according to a full/exact 360 degrees, but may deviate a few degrees depending on the particular camera settings and circumstances. An ideal omnidirectional camera captures light from all directions falling onto the focal point, covering a full sphere. In practice, however, most omnidirectional cameras cover only almost the full sphere and many cameras which are referred to as omnidirectional cover only approximately a hemisphere, or 360 degrees along the equator of the sphere (horizontal plane) but excluding the top and bottom of the sphere. The omnidirectional camera according to the present invention shall encompass all these types of omnidirectional cameras.

The camera 12 is configured and arranged to capture at least one sequence of real environment images (called herein second images 22) of a real environment 4 proximate to the vehicle 1. For example, the camera 12 may be mounted to a portion of the vehicle 1, such as the roof or another body part of the vehicle. The real environment proximate to the user or vehicle means that the user or vehicle is placed in, or moving through, the real environment. The real environment proximate to the user or vehicle may also be designated as real world surroundings of the user or vehicle.

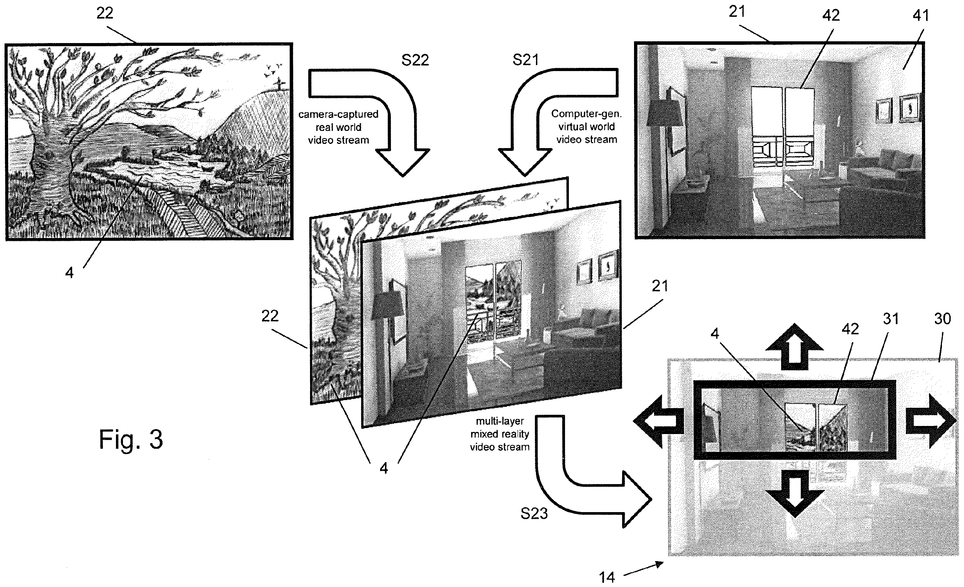

The images 22 of the real environment, which are captured instantly (in situ) by the camera 12 while the method is being applied, are displayed on the head-mounted display device 14, e.g. during movement of the vehicle (see Fig. 3 depicting one such display 30 according to an embodiment). For example, the panoramic vehicle camera 12 is placed on the vehicle roof 3 (the camera 12 may also be at least partly integrated in the roof 3, for example as is common with commonly known vehicle antennas) to record the environment (preferably the real environment 4 located in front and in the periphery of the vehicle 1, or around the vehicle 1 if an omnidirectional camera is used) when driving with the vehicle. The camera 12 may also be placed inside the vehicle, or at some other location in or on the vehicle. The sequence of images 22 captured by the camera 12 may form a continuous real world video stream S22 (so-called live image stream), or may be individual images taken at subsequent points of time during driving, or a combination of both, and are provided to the computing device 13.

In the present embodiment, the vehicle 1 further comprises a sensor device 15 providing sensor data for determining the vehicle speed. According to an embodiment, the sensor device 15 is a speed sensor providing speed data V for determining the vehicle speed. Generally, any sensor device can be used which provides speed data for determining at least one parameter indicative of speed with which the user 5 is moving. According to embodiments, the sensor device 15 is comprised in at least one of the vehicle 1, the camera 12, a navigation system located in the vehicle 1, and a portable device adapted to be carried by the user, for example a smartphone or tablet computer. The sensor device 15 is coupled with the computing device 13 in wired manner or wirelessly, e.g. using common wireless standards.

The computing device 13 is further coupled with a storing device 11, which may be a volatile or non-volatile memory for storing any kind of data, such as individual images, movies, or any other video streams. The storing device 11 may thus serve as a video source for providing a virtual reality video of a virtual world. For example, the computing device 13 receives from the storing device 11 a computer-generated VR video stream S21, which is a sequence of first images 21 to be displayed on the head-mounted display device 14. The one or more first images 21, or VR video stream S21, respectively, contain information for displaying a three-dimensional VR room to the user 5 of the head-mounted display device 14. In the present example, the VR room 41 contained in an image 21 is a virtual living room, but may also be a virtual inside passenger space of the vehicle 1, or a different virtual environment or delimited space. The illustration according to Fig. 3 shall only be for illustrative purposes and not be understood as limiting in this regard. As schematically shown in Fig. 3, the three-dimensional VR room 41 comprises at least one virtual see-through opening 42 to an outer side of the VR room 41, such as a window or door placed in a wall of the VR room 41. Generally, according to an embodiment, the at least one virtual see-through opening 42 has a structure of a window or door provided in a wall of a virtual delimited space, in the present example of a virtual living room or a virtual inner passenger space of the vehicle 1.

For example, the storing device 11 for storing the images 21 or VR video stream S21 is a memory of a smartphone or tablet computer, or may be a hard drive of the vehicle 1. The storing device 11 is coupled with the computing device 13 in wired manner or wirelessly, e.g. using common wireless standards.

With the head-mounted display device 14 the user 5 seated in the rear seat of the vehicle 1 can get an unobstructed view on the VR room 41 while moving within the real environment 4 which can be seen through the virtual windows 42 to see the real world outside, as described in more detail below. Thus, in the present example, the user 5 may experience a rear seat entertainment program (by looking at the VR video stream S21) with an impression as if he or she was seated in his or her living room (e.g. the virtual living room may contain a virtual TV with a movie displayed on it, or a movie is displayed on a wall of the virtual living room), while not loosing contact to the outside world through the windows 42 while moving through the real environment 4. The head-mounted display device 14 may give feedback to the computing device 13 as to position of the head-mounted display device 14 and/or the user's viewing direction, so that the display 30 of the live image stream S22 may be adjusted accordingly.

In the following, an operation of the image displaying apparatus 10 according to an embodiment will be described referring to the exemplary depiction of Fig. 3.

When the user 5 uses the rear seat entertainment system of the vehicle 1, he or she wears the head-mounted display device 14 which provides the user 5 with a display 30 which can be seen on the screen of the head-mounted display device 14. The computing device 13 is coupled with the head-mounted display device 14 for displaying the sequence of first images 21, i.e. the VR video stream S21, and the sequence of second images 22, i.e. the real world video stream or live image stream S22, simultaneously on the head-mounted display device 14 such that at least part of the second images 22 is visible to the user 5 in the virtual see-through opening 42, i.e. window, of the VR room 41. Through the virtual see-through opening 42 the user 5 has a view to the outer side of the vehicle 1, i.e. the real environment 4, while he or she may look at the VR room 41. That is, the user 5 can "look around" in the virtual room 41, as illustrated in Fig. 3 by the frame 31 and the shifting arrows associated with it. The user 5 can thus see the real world in real time (captured by the camera 2 on the vehicle's roof) through the windows 42 of a three-dimensional virtual room 41 in a natural way, while the virtual room may be experienced by the user as a virtual graphic overlay to the actual real passenger space.

During motion of the vehicle 1, the live image stream S22 provides a peripheral optical flow of images to the user 5 when the user 5 focuses on the virtual room 41. As schematically shown in Fig. 3, the sequence of first images 21 is overlaid onto the sequence of second images 22 (or vice versa) to a multi-layer sequence of images, in the present case a mixed reality video stream S23 on the head-mounted display device 14. In other words, the computing device 13 is combining the live image stream S22 and the virtual reality video stream S21 to a multi-layer mixed reality video stream S23 which is displayed to the user 5. With this concept, the user can enjoy a virtual room, but not lose the understanding of the real environment, because he or she can see the real world in real time through the virtual see-through openings, e.g. windows. Advantageously, such multi-layer combination of a real-time outside video stream with a computer generated VR video stream may create an immersive mixed reality impression to the user while not losing contact to the real environment through the virtual see-through openings when moving within the real environment.

According to an embodiment, a moving speed of images of the real world video stream S22 corresponds to a moving speed of the vehicle 1 (which is the same as the moving speed of the user 5) in the real environment 4. For example, in driving situations with higher vehicle speed measured by speed sensor 15, the moving speed of the images 22 is higher than in situations with lower speed to reflect a real world impression and to reduce motion sickness when experiencing the virtual room 41 in the vehicle 1. Thus, the user 5 can enjoy an unobstructed view on the virtual environment of the VR room 41 and journey of the vehicle 1 in the real environment 4 through the virtual see-through openings 42 as in reality, if he or she wants to, and is provided with live images captured by the camera 12 corresponding to the motion of the vehicle.

This provides a realistic solution of mixed reality with a possibility of the user for a total immersion into a real world superimposed with a surrounding virtual graphic overlay. At the same time, motion sickness may be avoided, because the motion reference of the real movement is still visible through the virtual windows or doors.

## Claims

1. A method of displaying image data on a virtual reality, VR, display device (14), particularly disposed in a vehicle (1) and associated with a user (5) accommodated in the vehicle (1), the method comprising the steps of:
- receiving, by a computing device (13) comprising a processor (16) and adapted to be coupled with the VR display device (14), at least one first image (21) for displaying on the VR display device (14), the at least one first image (21) containing information for displaying a three-dimensional VR room (41) to the user (5) of the VR display device (14), with the three-dimensional VR room (41) comprising at least one virtual see-through opening (42) to an outer side of the VR room (41),
- receiving, by the computing device (13), at least one sequence of second images (22) of a real environment proximate to the user captured by at least one camera,
- displaying, by the computing device (13), the at least one first image (21) and the at least one sequence of second images (22) simultaneously on the VR display device (14) such that at least part of the at least one sequence of second images (22) is visible to the user (5) in the at least one virtual see-through opening (42) of the VR room (41).

2. The method according to claim 1, wherein the virtual see-through opening (42) has a structure of a window or door provided in a wall of a virtual delimited space.

3. The method according to claim 1 or 2, wherein the virtual see-through opening (42) is a virtual see-through opening to an outer side of the vehicle (1).

4. The method according to one of claims 1 to 3, wherein the VR room (41) is a three-dimensional VR room inside the vehicle (1) and the virtual see-through opening (42) is a virtual vehicle window or door.

5. The method according to one of claims 1 to 4, wherein the VR display device (14) is part of a rear-seat entertainment system of the vehicle (1).

6. The method according to one of claims 1 to 5, wherein the VR display device (14) is a head-mounted display device worn by the user (5).

7. The method according to one of claims 1 to 6, wherein the at least one sequence of second images (22) comprises images captured by an omnidirectional camera (12) or camera arrangement with an approximately 360-degree field of view at least in a horizontal plane.

8. The method according to one of claims 1 to 7, wherein the at least one first image (21) is at least one sequence of first images (21).

9. The method according to claim 8, wherein at least one of the sequences of first images (21) and second images (22) is part of a respective video stream.

10. The method according to one of claims 1 to 9, wherein a moving speed of images of the sequence of second images (22) corresponds to a moving speed of the user (5) in the real environment (4).

11. A computer program product comprising software code sections which are adapted to perform a method according to one of the preceding claims when loaded into an internal memory of the computing device (13).

12. Image displaying apparatus (10), particularly configured to be used in a vehicle (1), comprising
- a computing device (13) comprising a processor (16), the computing device configured to be coupled with a virtual reality, VR, display device (14), which is particularly associated with a user (5) accommodated in the vehicle (1), and configured to receive at least one first image (21) for displaying on the VR display device (14), wherein the at least one first image (21) contains information for displaying a three-dimensional VR room (41) to the user (5), the three-dimensional VR room (41) comprising at least one virtual see-through opening (42) to an outer side of the VR room (41),
- the computing device (13) configured to receive at least one sequence of second images (22) of a real environment (4) proximate to the user (5) captured by at least one camera (12),
- the computing device (13) configured to display the at least one first image (21) and the at least one sequence of second images (22) simultaneously on the VR display device (14) such that at least part of the at least one sequence of second images (22) is visible to the user (5) in the at least one virtual see-through opening (42) of the VR room (41).

13. Image displaying apparatus according to claim 12, further comprising as the at least one camera a panoramic vehicle camera (12) or camera arrangement which has a panoramic field of view at least in a horizontal plane of the vehicle (1), and preferably which is mounted at a roof (3) of the vehicle.

14. Image displaying apparatus according to one of claims 12 to 13, wherein the computing device (13) is comprised in at least one of: the vehicle (1), the at least one camera (12), the VR display device (14), and a portable device adapted to be carried by the user (5), preferably wherein the portable device is one of a smartphone and tablet computer.

15. Image displaying apparatus according to one of claims 12 to 14, wherein the VR display device is a head-mounted display device (14).
